# EUROPÄISCHE PATENTSCHRIFT

(11) **EP 3 705 637 B1**
(45) Veröffentlichungstag und Bekanntmachung des Hinweises auf die Patenterteilung: **12.01.2022**
(21) Anmeldenummer: 20161143.1
(22) Anmeldetag: 05.03.2020
(51) Int. Cl.: E03C 1/02

(54) **WANDMONTIERBARE SANITÄRE VERTEILER- UND LEITUNGSANSCHLUSSVORRICHTUNG MIT INTEGRIERTEN VENTILEN**
WALL MOUNTABLE SANITARY DISTRIBUTION AND CONNECTION DEVICE WITH INTEGRATED VALVES
DISPOSITIF DE DISTRIBUTION ET RACCORDEMENT DE CONDUITE SANITAIRE POUVANT ÊTRE MONTÉ SUR UN MUR POURVU DE SOUPAPES INTÉGRÉES

(30) Priorität: 08.03.2019 DE 102019203221
(43) Veröffentlichungstag der Anmeldung: 09.09.2020
(73) Patentinhaber: Hansgrohe SE, 77761 Schiltach (DE)
(72) Erfinder: HAHN, Arno, 77761 Schiltach (DE); MEIER, Fridolin, 77709 Oberwolfach (DE); WERNER, Bernd, 78727 Oberndorf-Beffendorf (DE)
(74) Vertreter: Patentanwälte Ruff, Wilhelm, Beier, Dauster & Partner mbB

(56) Entgegenhaltungen:
- WO-A1-2018/072876
- KR-A- 20070 011 046
- US-A1- 2002 144 341

## Beschreibung

Die Erfindung bezieht sich auf eine wandmontierbare sanitäre Leitungsanschlussvorrichtung mit einem wandmontierbaren Basiskörper, einem an dem Basiskörper festlegbaren Ventilblockkörper und am Ventilblockkörper gehaltenen Ventilen.

Leitungsanschlussvorrichtungen dieser Art dienen in der Sanitärtechnik insbesondere als Schnittstelle zwischen gebäudeseitigen Wasserversorgungsinstallationen einerseits und Endverbrauchereinrichtungen, wie Duschbrausen und sanitäre Auslaufhähne bzw. Auslaufarmaturen an Waschtischen, Badewannen, Küchenspülen und dgl., andererseits. Sie sind sowohl in Ausführungen vom Aufputztyp als auch in Ausführungen vom Unterputztyp z.B. als sogenannte Aufputz- bzw. Unterputz-Einbaukästen gebräuchlich, neben dem vorliegend betrachteten Typ mit integriertem Ventil alternativ in Ausführungen ohne Ventil. Oftmals werden solche Leitungsanschlussvorrichtungen auch als sogenannte Wassersteckdosen eingesetzt. Unter wandmontierbar ist vorliegend zu verstehen, dass die sanitäre Leitungsanschlussvorrichtung dafür bestimmt und eingerichtet ist, an einer gebäudeseitigen Wand montiert werden zu können, speziell an einem Wandbereich, in dem ein gebäudeseitiger Wasserinstallationsanschlusspunkt vorliegt. Mit dem Begriff Wand ist hierbei vorliegend allgemein eine für die Montage der Leitungsanschlussvorrichtung geeignete gebäudeseitige Fläche zu verstehen, bei der es sich sowohl um eine eigentliche vertikale Wandfläche eines Gebäudes als auch um eine Deckenfläche oder Bodenfläche handeln kann.

Stellvertretend seien zum Stand der Technik, primär bezüglich Unterputz-Ausführungen, die Offenlegungsschriften DE 10 2016 214 777 A1, DE10 2017 100 707 A1, US 2011/0290356 A1, DE 10 2004 060 744 A1, DE 197 02 356 A1, DE 10 2004 054 642 A1, DE 196 22 368 A1, DE 10 2004 060 744 A1, DE 196 27 571 A1, US 2009/0057591 A1, EP 0 844 340 A1 und DE 39 07 586 A1 sowie die Patentschriften EP 2 889 522 B1, US 9.650.768 B2 und US 10.138.619.B2 genannt, in denen Leitungsanschlussvorrichtungen dieser und ähnlicher Art mit einem oder mehreren integrierten Ventilen oder ohne integriertes Ventil offenbart sind. Besonders hingewiesen sei zudem auf die Offenlegungsschrift WO 2018/072876, die die Merkmale des Oberbegriffs von Anspruch 1 zeigt.

Der Erfindung liegt als technisches Problem die Bereitstellung einer wandmontierbaren sanitären Leitungsanschlussvorrichtung der eingangs genannten Art zugrunde, die gegenüber dem oben erwähnten Stand der Technik Verbesserungen hinsichtlich Flexibilität in der Anwendung, kompakter Bauform, Fertigungsaufwand und/oder Einsatzmöglichkeiten in modernen Sanitärsystemen einschließlich Systemen mit Wassersteckdosen und Systemen für sanitäre Smart-Home-Anwendungen bietet.

Die Erfindung löst dieses Problem durch die Bereitstellung einer wandmontierbaren sanitären Leitungsanschlussvorrichtung mit den Merkmalen des Anspruchs 1. Diese Leitungsanschlussvorrichtung beinhaltet einen wandmontierbaren Basiskörper, der eine Wandbefestigungsseite, einen Wassereinlass und auf einer der Wandbefestigungsseite entgegengesetzten Ventilblockkopplungsseite eine basisseitige Anlagefläche aufweist, und einen Ventilblockkörper, der eine Verteilkammer mit einem an den Wassereinlass ankoppelbaren Verteilkammereinlass, eine zur basisseitigen Anlagefläche konforme, ventilblockseitige Anlagefläche auf einer Basiskopplungsseite und mindestens drei Leitungsanschlussstutzen auf einer der Basiskopplungsseite entgegengesetzten Leitungskopplungsseite aufweist, die mit zueinander parallelen Stutzenlängsachsen in einer Reihe nebeneinanderliegend angeordnet sind.

Des Weiteren beinhaltet die Leitungsanschlussvorrichtung mindestens drei elektrisch ansteuerbare Ventile, die jeweils eine Ventilkartusche beinhalten, von denen jede einen mit der Verteilkammer in Fluidverbindung stehenden Ventileinlass aufweist und die mit zueinander parallelen Ventilkartuschen-Längsachsen am Ventilblockkörper gehalten sind, wobei die Ventilkartuschen-Längsachsen um einen Mittelpunkt herum in einer zu den Ventilkartuschen-Längsachsen senkrechten Umfangsrichtung zueinander versetzt angeordnet sind. Je nach Bedarf können in dieser Weise drei, vier oder mehr Ventile angeordnet sein. Der Ventilblockkörper weist eine entsprechende Anzahl von mindestens drei voneinander getrennte Fluidführungen jeweils von einem der Ventilauslässe zu einem der Leitungsanschlussstutzen auf und ist mit seiner ventilblockseitigen Anlagefläche gegen die basisseitige Anlagefläche anliegend am Basiskörper festlegbar.

Unter der Bezeichnung Leitungsanschlussstutzen sind hierbei vorliegend Anschlussstutzen sowohl zum Ankoppeln starrer wasserführender Rohrleitungen als auch flexibler wasserführender Schlauchleitungen zu verstehen, z.B. eine starre Rohrleitung, die zu einem Brausekörper bzw. Brausekopf führt, oder ein zu einem Brausekopf führender, flexibler Brauseschlauch. Die Leitungsanschlussstutzen bilden hierbei Auslassöffnungen je einer zugehörigen, ventilgesteuerten Fluidführung der Leitungsanschlussvorrichtung für über den Wassereinlass zugeführtes Wasser, wobei an die Auslassöffnungen in gewünschter Weise ein oder mehrere sanitäre Endverbraucher, wie eine Duschbrause oder eine Wasserauslaufarmatur beispielsweise in Form üblicher Mischerarmaturen oder Auslaufhähnen, ankoppelbar sind, z.B. eine mindestens dreikanalige herkömmliche Duschbrause, die zur Bereitstellung unterschiedlicher Strahlarten ausgelegt ist, oder mindestens drei parallel anzuschließende und über die elektrische Ansteuerung der Ventile wahlweise bzw. individuell mit Wasser zu versorgende Brausen und/oder Auslaufhähne.

Durch diesen Aufbau ist die Leitungsanschlussvorrichtung flexibel für verschiedene Anwendungen einsetzbar, gerade auch in modernen Sanitäreinrichtungen vom Smart-Home-Typ oder in Sanitärsystemen mit Wassersteckdosen. Durch die Verwendung elektrisch ansteuerbarer Ventile kann die Wasserführung in der Leitungsanschlussvorrichtung elektrisch gesteuert werden, was insbesondere eine Fernsteuerung der Wasserführung ermöglicht, so dass eine direkte Zugänglichkeit der Leitungsanschlussvorrichtung zum Betätigen der Ventile nicht zwingend erforderlich ist. Bei den Ventilen kann es sich insbesondere Absperrventile handeln, alternativ um Ventile anderen Typs, wie Mischventile oder Umstellventile, wozu Ventile dann entsprechend eine oder mehrere zusätzliche Ventileinlassöffnungen und/oder Ventilauslassöffnungen besitzen können. Durch die Verwendung von Ventilen mit vorzugsweise zylindrischer Ventilkartusche kann die Leitungsanschlussvorrichtung bei Bedarf flexibel mit einem jeweils gewünschten Ventil bestückt werden, das dann mit seiner Ventilkartusche am Ventilblockkörper gehalten ist. Wenn für bestimmte Anwendungen nur ein oder zwei Ventile benötigt werden, können die restlichen Ventile inaktiv gehalten werden, oder der betreffende Einbauplatz am Ventilblockkörper kann unbestückt bleiben.

Vorteilhaft ist des Weiteren die Realisierung der Leitungsanschlussvorrichtung mit den in einer Reihe nebeneinander angeordneten Leitungsanschlussstutzen einerseits und mit der mit ihren Längsachsen um einen Mittelpunkt herum in einer zu den Ventilkartuschen-Längsachsen senkrechten Umfangsrichtung zueinander versetzten Anordnung der Ventilkartuschen andererseits. Dies kombiniert in besonders günstiger Weise eine kompakte Anordnung der drei oder mehr Ventile und damit eine entsprechend mögliche kompakte Bauform der Leitungsanschlussvorrichtung insgesamt mit einer austrittsseitig typischerweise geforderten Anordnung der zugehörigen drei oder mehr Leitungsanschlussstutzen in einer Linie bzw. Reihe nebeneinander. Wenn für bestimmte Anwendungen nur ein oder zwei Leitungsanschlussstutzen benötigt werden, können die nicht benötigten Leitungsanschlussstutzen unbelegt bleiben und die zugehörigen Ventile inaktiv gehalten werden.

Weiter vorteilhaft ist, dass in den Ventilblockkörper die drei oder mehr voneinander getrennten Fluidführungen vom jeweiligen Ventilauslass zum zugeordneten Leitungsanschlussstutzen integriert sind, wobei die Fluidführungen so konfiguriert sind, dass das Wasser aus den in Umfangsrichtung versetzt angeordneten Ventilkartuschen zu den in einer Reihe angeordneten Leitungsanschlussstutzen gelangt. Der Ventilblockkörper liegt im montierten Zustand stabil mit seiner ventilblockseitigen Anlagefläche gegen die basisseitige Anlagefläche des Basiskörpers an, wobei sein Verteilkammereinlass fluiddicht an den Wassereinlass des Basiskörpers angekoppelt ist.

In einer Weiterbildung der Erfindung sind die Ventilkartuschen von zylindrischer Form und weisen jeweils an einer ersten Stirnseite eine elektrische Ventilanschlusseinheit und an einer zweiten, der Leitungskopplungsseite des Ventilblockkörpers zugewandten Stirnseite den Ventileinlass und den Ventilauslass auf. Dies stellt eine zur Erzielung kompakter Bauformen für die Leitungsanschlussvorrichtung günstige Aufteilung des elektrischen Anschlusses einerseits und der Fluidanschlüsse des jeweiligen Ventils andererseits dar. Am Ventilblockkörper können die Ventilkartuschen dann beispielsweise mit ihrer die elektrische Ventilanschlusseinheit aufweisenden ersten Stirnseite dem Basiskörper zugewandt orientiert sein, so dass sie mit ihrer den Ventileinlass und den Ventilauslass aufweisenden anderen von einer Wandfläche nach vorn weisend orientiert sind, wenn die Leitungsanschlussvorrichtung an der Wandfläche angebracht ist.

In einer Weiterbildung der Erfindung beinhaltet der Ventilblockkörper einen umfangsseitig umlaufenden gummielastischen Haltering, und das jeweilige Ventil weist einen von der ersten Stirnseite seiner Ventilkartusche abgehendes elektrisches Anschlusskabel auf, das durch einen Kabelführungszwischenraum zwischen dem Gummihaltering und einem benachbarten Bereich des Ventilblockkörpers hindurchgeführt ist. Dies kann die elektrische Kabelführung für die Ventile optimieren. Insbesondere ist es mit dieser Maßnahme nicht notwendig, dass die Ventilkartuschen an ihrer ersten Stirnseite, an der sich ihre elektrische Ventilanschlusseinheit befindet, für elektrische Kontaktierungsmaßnahmen zugänglich bleiben, wenn der Ventilblockkörper am Basiskörper festgelegt ist. Diese elektrischen Kontaktierungsmaßnahmen können durch diese Maßnahme an einer leichter zugänglichen Stelle der Leitungsanschlussvorrichtung vorgenommen werden. Bei Bedarf kann der gummielastische Haltering zusätzlich zur verliergesicherten Halterung von Befestigungselementen, wie Schrauben, dienen, die je nach Ausführung der Leitungsanschlussvorrichtung am Ventilblockkörper vorgesehen sind. Der Haltering kann z.B. einfach nach Art eines Gummidichtrings bzw. O-Ringgummis gefertigt sein.

In einer Weiterbildung der Erfindung liegen die basisseitige Anlagefläche und die ventilblockseitige Anlagefläche jeweils auf einer Kugelschale. Dadurch kann der Ventilblocckörper bei der Montage am Basiskörper in seiner Lage relativ zum Basiskörper nach Bedarf ausgerichtet werden, wobei die beiden gegeneinander zur Anlage kommenden Anlageflächen als kugelschalenförmiges Ausrichtgelenk fungieren. Der Ventilblocckörper wird dann in ausgerichteter Lage am Basiskörper festgelegt, z.B. mittels Schraubverbindung oder einer anderen, vorzugsweise lösbaren Verbindung wie einer Rastverbindung oder dgl.

In einer Weiterbildung der Erfindung mündet der Wassereinlass an einem an die Wandbefestigungsseite des Basiskörpers angrenzenden Seitenbereich des Basiskörpers seitlich in den Basiskörper. Dies kann dazu beitragen, dass sich die Leitungsanschlussvorrichtung mit relativ geringer Bautiefe, d.h. relativ geringer Abmessung in Richtung senkrecht zur Montagewandfläche, realisieren lässt.

In einer Weiterbildung der Erfindung besitzt der Ventilblockkörper einen kreisförmigen Querschnitt, und die Ventilkartuschen-Längsachsen sind innerhalb dieses Querschnitts mit äquidistantem Winkelabstand in Umfangsrichtung versetzt auf einem gemeinsamen Radius angeordnet. Dies trägt zu einer bei Bedarf sehr kompakten Bauform des Ventilblockkörpers und damit auch der Leitungsanschlussvorrichtung insgesamt bei.

In einer Weiterbildung der Erfindung umfasst der Basiskörper eine wandmontierbare Basisplatte und einen an der Basisplatte befestigten Sockelkörper, der den Wassereinlass aufweist. Dies stellt eine fertigungstechnisch und montagetechnisch vorteilhafte, mehrteilige Realisierung des Basiskörpers dar. Über die Basisplatte kann der Basiskörper an einer Wandfläche in gewünschter Weise in einer Unterputz- oder einer Aufputz-Montagetechnik montiert werden, wobei der Sockelkörper seinerseits an der Basisplatte z.B. lösbar mittels Schrauben oder dgl. befestigt ist und an ihm der Wassereinlass vorgefertigt ist.

In einer Weiterbildung der Erfindung besitzt der Basiskörper eine Leerrohraufnahme für ein Leerrohr, das zur Aufnahme einer oder mehrerer elektrischer Leitungen genutzt werden kann. Dies ermöglicht eine einfache elektrische Kabelzuführung für die elektrisch ansteuerbaren Ventile.

In einer Weiterbildung der Erfindung bildet der Basiskörper eine Anschlussbox mit einem Boxgehäusedeckel. Der Boxgehäusedeckel schützt den Innenraum des Basiskörpers einschließlich der Ventile und kann auch als optische Abdeckung fungieren. Die Anschlussbox eignet sich insbesondere als Unterputz-Einbaukasten für Unterputz-Realisierungen der Leitungsanschlussvorrichtung.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Perspektivansicht einer wandmontierbaren sanitären Leitungsanschlussvorrichtung,
- Fig. 2: eine Draufsicht auf die Leitungsanschlussvorrichtung von Fig. 1,
- Fig. 3: eine Schnittansicht längs einer Linie III-III in Fig. 2 ohne Basisplatte,
- Fig. 4: eine Schnittansicht längs einer Linie IV-IV in Fig. 2 und
- Fig. 5: eine Schnittansicht längs einer Linie V-V in Fig. 4.

Die in den Figuren veranschaulichte sanitäre Leitungsanschlussvorrichtung ist zur Montage an einer gebäudeseitigen Wandfläche, z.B. einer vertikalen Gebäudewandfläche oder einer Decken- oder Bodenfläche, eingerichtet und weist einen wandmontierbaren Basiskörper 1 auf, der eine Wandbefestigungsseite 2, einen Wassereinlass 3 und auf einer der Wandbefestigungsseite 2 entgegengesetzten Ventilblockkopplungsseite 6 eine basisseitige Anlagefläche 7 beinhaltet. Des Weiteren besitzt die Leitungsanschlussvorrichtung einen Ventilblockkörper 8 und mindestens drei elektrisch ansteuerbare Ventile 4₁, 4₂, 4₃, die jeweils eine Ventilkartusche 5₁, 5₂, 5₃ beinhalten, wobei die Ventilkartuschen 5₁, 5₂ 5₃ mit zueinander parallelen Ventilkartuschen-Längsachsen V_{L} am Ventilblockkörper 8 gehalten sind.

Der Ventilblockkörper 8 weist eine Verteilkammer 9 mit einem an den Wassereinlass 3 ankoppelbaren Verteilkammereinlass 9a, eine zur basisseitigen Anlagefläche 7 des Basiskörpers 1 konforme, ventilblockseitige Anlagefläche 10 auf einer Basiskopplungsseite 11 und mindestens drei Leitungsanschlussstutzen 13₁, 13₂, 13₃ auf einer der Basiskopplungsseite 11 entgegengesetzten Leitungskopplungsseite 12 auf. Dabei sind die Leitungsanschlussstutzen 13₁, 13₂, 13₃ mit zueinander parallelen Stutzenlängsachsen S_{L} in einer Reihe nebeneinanderliegend angeordnet.

Die Ventilkartuschen 5₁, 5₂, 5₃ besitzen jeweils einen mit der Verteilkammer 9 des Ventilblockkörpers 8 in Fluidverbindung stehenden Ventileinlass 14 sowie einen Ventilauslass 15. Die Ventilkartuschen 5₁, 5₂, 5₃ sind in einer speziellen gegenseitigen Lage und Orientierung am Ventilblockkörper 8 gehalten, nämlich derart, dass sie mit ihren Längsachsen V_{L} um einen Mittelpunkt M_{V} herum in einer zu den Längsachsen V_{L} senkrechten Umfangsrichtung U_{V} zueinander versetzt angeordnet sind.

Der Ventilblockkörper 8 weist mindestens drei voneinander getrennte Fluidführungen 16₁, 16₂, 16₃ auf, die jeweils von einem zugehörigen der Ventilauslässe 15 zu einem zugehörigen der Leitungsanschlussstutzen 13₁, 13₂, 13₃ führen. Mit seiner ventilblockseitigen Anlagefläche 10 ist der Ventilblockkörper 8 gegen die basisseitige Anlagefläche 7 des Basiskörpers 1 anliegend am Basiskörper 1 festlegbar.

In entsprechenden Ausführungen sind die Ventilkartuschen 5₁, 5₂, 5₃ wie beim gezeigten Beispiel von zylindrischer Form und weisen jeweils an einer ersten Stirnseite 17 eine elektrische Ventilanschlusseinheit 18 und an einer zweiten, der Leitungskopplungsseite 12 des Ventilblockkörpers 8 zugewandten Stirnseite 19 den Ventileinlass 14 und den Ventilauslass 15 auf.

In vorteilhaften Ausführungsformen beinhaltet der Ventilblockkörper 8 wie im gezeigten Beispiel einen umfangsseitig umlaufenden, gummielastischen Haltering 20, und das jeweilige Ventil 4₁, 4₂, 4₃ weist ein von der ersten Stirnseite 17 bzw. seiner dortigen elektrischen Anschlusseinheit 18 seiner Ventilkartusche 5₁, 5₂, 5₃ abgehendes elektrisches Anschlusskabel 21 auf, das durch einen Kabelführungszwischenraum 22 zwischen dem Haltering 20 und einem benachbarten Bereich des Ventilblockkörpers 8 hindurchgeführt ist. Dadurch können die Anschlusskabel 21 der Ventile 4₁, 4₂, 4₃ vorteilhaft insbesondere in Richtung von der ersten Ventilstirnseite 17 weg in Richtung der zweiten Ventilstirnseite 19 geführt werden.

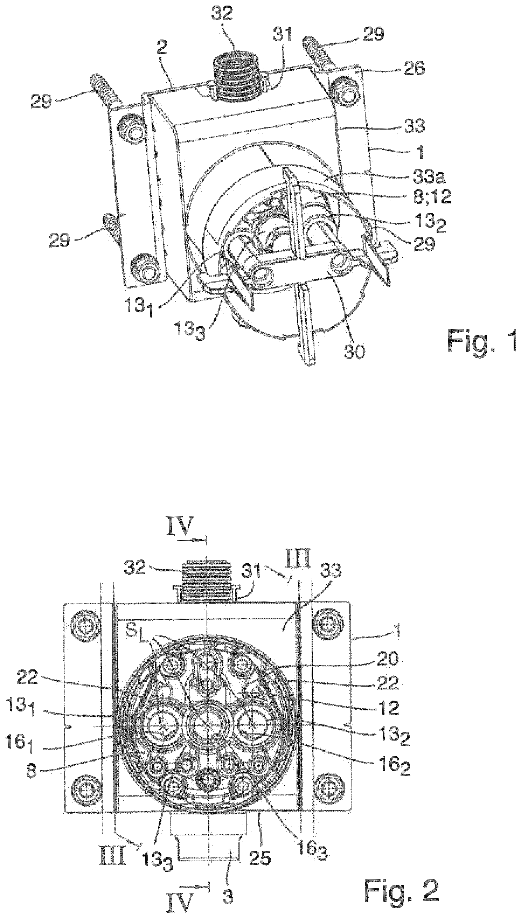

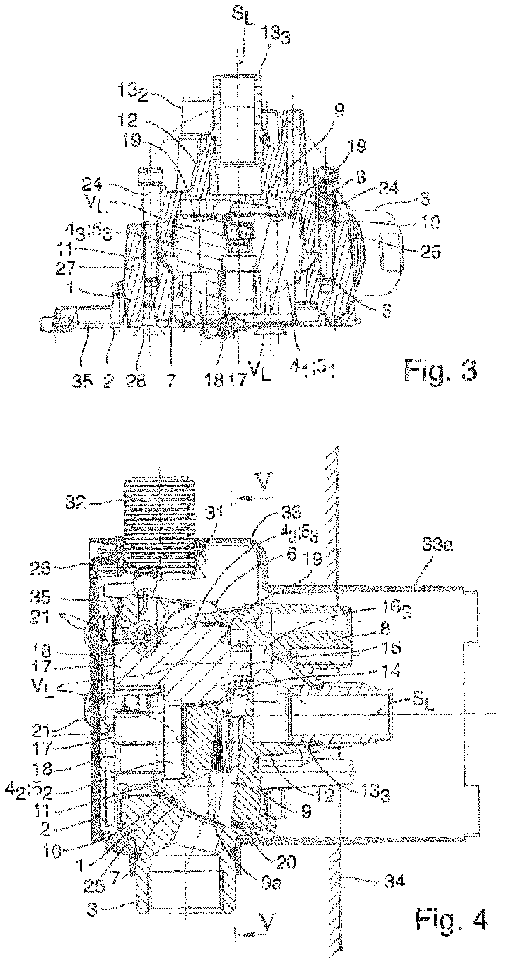

In vorteilhaften Ausführungen liegen wie beim gezeigten Beispiel die basisseitige Anlagefläche 7 des Basiskörpers 1 und die ventilblockseitige Anlagefläche 10 des Ventilblockkörpers 8 jeweils auf einer Kugelschale 23, wie in Fig. 3 gestrichelt angedeutet. Dies realisiert beim Anlegen des Ventilblockkörpers 8 an den Basiskörper 1 ein kugelschalenförmiges Ausrichtgelenk, mit dem der Ventilblockkörper 8 vor seiner Fixierung am Basiskörper 1 in seiner Lage ausgerichtet werden kann. Zur Ausrichtung des Ventilblockkörpers 8 insbesondere gegenüber einer Wandfläche und/oder gegenüber der Orientierung von an die Leitungsanschlussstutzen 13₁, 13₂, 13₃ anzuschließenden Endverbraucherleitungen kann z.B. eine entsprechende Ausrichtschablone bzw. Ausrichthilfe 30 verwendet werden, wie sie in Fig. 1 gezeigt ist. Zur Festlegung des Ventilblocckörpers 8 am Basiskörper 1 können z.B. wie gezeigt Schrauben 24 verwendet werden. Im gezeigten Beispiel sind dies vier in Umfangsrichtung versetzt angeordnete Schrauben 24. In vorteilhaften Realisierungen sind die Schrauben 24 mittels des Halterings 20 verliersicher am Ventilblockkörper 8 gehalten.

In entsprechenden Ausführungen mündet wie beim gezeigten Beispiel der Wassereinlass 3 an einem an die Wandbefestigungsseite 2 des Basiskörpers angrenzenden Seitenbereich 25 seitlich in den Basiskörper 1. Dies erleichtert eine Realisierung der Leitungsanschlussvorrichtung mit relativ geringer Bautiefe.

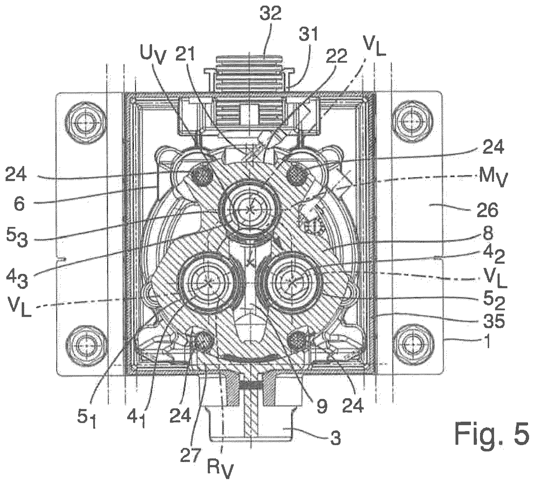

In entsprechenden Ausführungen besitzt der Ventilblockkörper 8 wie beim gezeigten Beispiel einen kreisförmigen Querschnitt, wie insbesondere aus den Fig. 2 und 5 ersichtlich, innerhalb dem die Ventilkartuschen-Längsachsen V_{L} mit äquidistantem Winkelabstand in Umfangsrichtung Uv versetzt auf einem gemeinsamen Radius R_{V} angeordnet sind, wie insbesondere aus Fig. 5 ersichtlich. Bei drei Ventilen 4₁, 4₂, 4₃ beträgt der Umfangswinkelabstand folglich 120°, bei vier oder mehr Ventilen 4₁, 4₂, 4₃, ... ist er gleich einem entsprechenden Bruchteil von 360°. Dies optimiert eine bauraumkompakte Anordnung der Ventile 4₁, 4₂, 4₃.

In vorteilhaften Realisierungen umfasst der Basiskörper 1 eine wandmontierbare Basisplatte 26 und einen an der Basisplatte 26 z.B. mittels Schrauben 28 befestigten Sockelkörper 27, der den Wassereinlass 3 aufweist. Über die Basisplatte 26 kann der Basiskörper 1 an einer Wandfläche befestigt werden, beispielsweise wie gezeigt unter Verwendung von Schraubverbindungen 29. Die Basisplatte 26 ist in den Fig. 1, 2, 4 und 5 gezeigt, in Fig. 3 zur besseren Erkennbarkeit anderer Komponenten weggelassen, wobei dort stellvertretend die Schrauben 28 gezeigt sind.

In entsprechenden Realisierungen beinhaltet der Basiskörper 1 eine Leerrohraufnahme 31 für ein Leerrohr 32, in welchem elektrische Leitungen bzw. Kabel aufgenommen werden können, insbesondere zum elektrischen Anschließen der Ventile 4₁, 4₂, 4₃ durch Verbinden mit deren elektrischen Anschlusskabeln 21.

In entsprechenden Ausführungen bildet der Basiskörper 1 wie im gezeigten Beispiel eine Anschlussbox mit einem Boxgehäusedeckel 33. Der Boxgehäusedeckel 33 besitzt im Fall von Unterputz-Ausführungen, wie im gezeigten Beispiel, vorzugsweise einen in Richtung der Leitungskopplungsseite 12 des Ventilblockkörpers 8 offenen Kragen 33a bzw. Zylinderabschnitt, der nach Fertigstellung der Wandfläche z.B. durch Aufbringen eines Wandputzes oder von Wandkacheln bündig mit einer in Fig. 4 schematisch angedeuteten, fertigen Wandoberfläche 34 abgeschnitten oder anderweitig bündig abgelängt werden kann.

Optional ist ein Dichtungskörper 35 einsetzbar, der für eine Fluiddichtheit des Basiskörpers 1 sorgt und gleichzeitig eine integrierte Schallentkopplung bereitstellen kann. Der Dichtungskörper 35 kann sich dazu mit entsprechenden Abschnitten als flächige Trennung zwischen der Basisplatte 26 und dem Sockelkörper 27 erstrecken und/oder als flächige Platte die Basisplatte 26 bedecken und/oder sich zwischen der Basisplatte 26 und dem Boxgehäusedeckel 33 erstrecken.

Wie die gezeigten und die weiteren oben erläuterten Ausführungsbeispiele deutlich machen, stellt die Erfindung in sehr vorteilhafter Weise eine wandmontierbare sanitäre Leitungsanschlussvorrichtung zur Verfügung, die eine große Flexibilität in der Anwendung besitzt, sich sehr kompakt und mit relativ geringem Aufwand bauen lässt und sich in modernen Sanitärsystemen einschließlich Systemen mit Wassersteckdosen und Smart-Home-Systemen nutzbringend verwenden lässt.

## Patentansprüche

1. Wandmontierbare sanitäre Leitungsanschlussvorrichtung mit
- einem wandmontierbaren Basiskörper (1), der eine Wandbefestigungsseite (2), einen Wassereinlass (3) und auf einer Ventilblockkopplungsseite (6) eine basisseitige Anlagefläche (7) aufweist,
- einem Ventilblockkörper (8), der eine Verteilkammer (9) mit einem an den Wassereinlass ankoppelbaren Verteilkammereinlass (9a), eine zur basisseitigen Anlagefläche (7) konforme, ventilblockseitige Anlagefläche (10) auf einer Basiskopplungsseite (11) und mindestens drei Leitungsanschlussstutzen (13₁, 13₂, 13₃) auf einer Leitungskopplungsseite (12) aufweist, die mit zueinander parallelen Stutzenlängsachsen (S_{L}) in einer Reihe nebeneinanderliegend angeordnet sind, und
- mindestens drei elektrisch ansteuerbaren Ventilen (4₁, 4₂, 4₃),
- wobei der Ventilblockkörper (8) mindestens drei voneinander getrennte Fluidführungen (16₁, 16₂, 16₃) jeweils von einem der Ventilauslässe (15) zu einem der Leitungsanschlussstutzen (13₁, 13₂, 13₃) aufweist,
**dadurch gekennzeichnet, dass**
- die Ventilblockkopplungsseite (6) der Wandbefestigungsseite (2) entgegengesetzt ist,
- die Leitungskopplungsseite (12) der Basiskopplungsseite (11) entgegengesetzt ist,
- der Ventilblockkörper (8) mit seiner ventilblockseitigen Anlagefläche (10) gegen die basisseitige Anlagefläche (7) anliegend am Basiskörper (1) festlegbar ist und
- die elektrisch ansteuerbaren Ventile (4₁, 4₂, 4₃) jeweils eine Ventilkartusche (5₁, 5₂, 5₃) beinhalten, von denen jede einen mit der Verteilkammer (9) in Fluidverbindung stehenden Ventileinlass (14) und einen Ventilauslass (15) aufweist und die mit zueinander parallelen Ventilkartuschen-Längsachsen (V_{L}) am Ventilblocckörper (8) gehalten sind, wobei die Ventilkartuschen-Längsachsen (V_{L}) um einen Mittelpunkt (M_{V}) herum in einer zu den Ventilkartuschen-Längsachsen (V_{L}) senkrechten Umfangsrichtung (U_{V}) zueinander versetzt angeordnet sind.

2. Wandmontierbare sanitäre Leitungsanschlussvorrichtung nach Anspruch 1, wobei die Ventilkartuschen von zylindrischer Form sind und jeweils an einer ersten Stirnseite (17) eine elektrische Ventilanschlusseinheit (18) und an einer zweiten, der Leitungskopplungsseite des Ventilblockkörpers zugewandten Stirnseite (19) den Ventileinlass und den Ventilauslass aufweisen.

3. Wandmontierbare sanitäre Leitungsanschlussvorrichtung nach Anspruch 1 oder 2, wobei der Ventilblockkörper einen umfangsseitig umlaufenden, gummielastischen Haltering (20) aufweist und das jeweilige Ventil ein von der ersten Stirnseite seiner Ventilkartusche abgehendes elektrisches Anschlusskabel (21) aufweist, das durch einen Kabelführungszwischenraum (22) zwischen dem Haltering und einem benachbarten Bereich des Ventilblockkörpers hindurchgeführt ist.

4. Wandmontierbare sanitäre Leitungsanschlussvorrichtung nach einem der Ansprüche 1 bis 3, wobei die basisseitige Anlagefläche und die ventilblockseitige Anlagefläche jeweils auf einer Kugelschale (23) liegen.

5. Wandmontierbare sanitäre Leitungsanschlussvorrichtung nach einem der Ansprüche 1 bis 4, wobei der Wassereinlass an einem an die Wandbefestigungsseite angrenzenden Seitenbereich (25) seitlich in den Basiskörper mündet.

6. Wandmontierbare sanitäre Leitungsanschlussvorrichtung nach einem der Ansprüche 1 bis 5, wobei der Ventilblockkörper einen kreisförmigen Querschnitt besitzt, innerhalb dem die Ventilkartuschen-Längsachsen mit äquidistantem Winkelabstand in Umfangsrichtung versetzt auf einem gemeinsamen Radius (R_{V}) angeordnet sind.

7. Wandmontierbare sanitäre Leitungsanschlussvorrichtung nach einem der Ansprüche 1 bis 6, wobei der Basiskörper eine wandmontierbare Basisplatte (26) und einen an der Basisplatte befestigten Sockelkörper (27) aufweist, der den Wassereinlass aufweist.

8. Wandmontierbare sanitäre Leitungsanschlussvorrichtung nach einem der Ansprüche 1 bis 7, wobei der Basiskörper eine Leerohraufnahme (31) für ein Leerrohr (32) für eine elektrische Leitung aufweist.

9. Wandmontierbare sanitäre Leitungsanschlussvorrichtung nach einem der Ansprüche 1 bis 8, wobei der Basiskörper eine Anschlussbox mit einem Boxgehäusedeckel (33) bildet.

## Claims

1. Wall-mountable sanitary conduit connection device, comprising
- a wall-mountable base body (1) having a wall fixation side (2), a water inlet (3) and a base-sided abutment surface (7) on a valve block coupling side (6),
- a valve block body (8) comprising a distribution chamber (9) having a distribution chamber inlet (9a) capable of being coupled to the water inlet, a valve block-sided abutment surface (10), conforming to the base-sided abutment surface (7), on a base coupling side (11), and at least three conduit connection ports (13₁, 13₂, 13₃) on a conduit coupling side (12), arranged adjacently in a row with port longitudinal axes (S_{L}) in parallel to each other, and
- at least three electrically controllable valves (4₁, 4₂, 4₃),
- wherein the valve block body (8) comprises at least three fluid passages (16₁, 16₂, 16₃) separate from each other, respectively from one of the valve outlets (15) to one of the conduit connection ports 13₁, 13₂, 13₃),
**characterized in that**
- the valve block coupling side (6) is opposite the wall fixation side (2),
- the conduit coupling side (12) is opposite the base coupling side (11),
- the valve block body (8) is fixable on the base body (1) with its valve block-sided abutment surface (10) resting against the base-sided abutment surface (7), and
- the electrically controllable valves (4₁, 4₂, 4₃) each include a valve cartridge (5₁, 5₂, 5₃), each of which comprising a valve inlet (14) in fluid communication with the distribution chamber (9) and a valve outlet (15), wherein the valve cartridges are held on the valve block body (8) with valve cartridge longitudinal axes (V_{L}) in parallel to each other, wherein the valve cartridge longitudinal axes (V_{L}) are arranged about a center point (MV) mutually offset in a peripheral direction (U_{V}) perpendicular to the valve cartridge longitudinal axes (V_{L}).

2. Wall-mountable sanitary conduit connection device according to claim 1, wherein the valve cartridges have a cylindrical shape and each valve cartridge comprises an electrical valve connection unit (18) on a first end face (17) and the valve inlet and the valve outlet on a second end face (19) facing the conduit coupling side of the valve block body.

3. Wall-mountable sanitary conduit connection device according to claim 1 or 2, wherein the valve block body comprises a circumferentially extending, rubber-elastic holding ring (20), and the respective valve comprises an electrical connection cable (21) outgoing from the first end face of its valve cartridge, which cable is guided through a cable guiding intermediate space (22) between the holding ring and an adjacent region of the valve block body.

4. Wall-mountable sanitary conduit connection device according to any one of claims 1 to 3, wherein the base-sided abutment surface and the valve block-sided abutment surface are respectively located on a spherical shell (23).

5. Wall-mountable sanitary conduit connection device according to any one of claims 1 to 4, wherein the water inlet leads laterally into the base body on a lateral side region (25) adjoining the wall fixation side.

6. Wall-mountable sanitary conduit connection device according to any one of claims 1 to 5, wherein the valve block body has a circular cross section and the valve cartridge longitudinal axes are arranged within said cross section on a common radius (R_{V}) offset with an equidistant angular distance in peripheral direction.

7. Wall-mountable sanitary conduit connection device according to any of claims 1 to 6, wherein the base body includes a wall-mountable base plate (26) and a socket body (27) fixed to the base plate, the socket body including the water inlet.

8. Wall-mountable sanitary conduit connection device according to any one of claims 1 to 7, wherein the base body comprises an empty tube accommodation (31) for an empty tube (32) for an electrical line.

9. Wall-mountable sanitary conduit connection device according to any one of claims 1 to 8, wherein the base body forms a connection box with a box-housing cover (33).

## Revendications

1. Dispositif sanitaire de raccordement de conduite, apte au montage mural, comprenant
- un corps de base (1) apte au montage mural, qui présente un côté de fixation au mur (2), une entrée d'eau (3) et, sur un côté de couplage de bloc de vannes (6), une surface d'appui (7) côté base,
- un corps de bloc de vannes (8) qui présente une chambre de distribution (9) pourvue d'une entrée de chambre de distribution (9a) pouvant être couplée à l'entrée d'eau, une surface d'appui (10) côté bloc de vannes conforme à la surface d'appui (7) côté base sur un côté de couplage de base (11), et au moins trois tubulures de raccordement de conduite (13₁, 13₂, 13₃) sur un côté de couplage de conduite (12), qui sont disposées côte à côte en une rangée avec des axes longitudinaux de tubulure (S_{L}) parallèles entre eux, et
- au moins trois vannes (4₁, 4₂, 4₃) à commande électrique,
- le corps du bloc de vannes (8) présentant au moins trois guides de fluide (16₁, 16₂, 16₃) séparés les uns des autres, allant chacun de l'une des sorties de vanne (15) jusqu'à l'une des tubulures de raccordement de conduite (13₁, 13₂, 13₃),
**caractérisé en ce que**
- le côté de couplage de bloc de vannes (6) est opposé au côté de fixation au mur (2),
- le côté de couplage de conduite (12) est opposé au côté de couplage de base (11),
- le corps de bloc de vannes (8) peut être immobilisé sur le corps de base (1) avec sa surface d'appui (10) côté bloc de vannes en appui contre la surface d'appui (7) côté base, et
- les vannes (4₁, 4₂, 4₃) à commande électrique contiennent chacune une cartouche de vanne (5₁, 5₂, 5₃), dont chacune présente une entrée de vanne (14) en communication fluidique avec la chambre de distribution (9) et une sortie de vanne (15), et sont maintenues sur le corps de bloc de vannes (8) avec des axes longitudinaux de cartouche de vanne (V_{L}) parallèles entre eux, les axes longitudinaux de cartouche de vanne (V_{L}) étant disposés en décalage les uns par rapport aux autres autour d'un point central (M_{V}) dans une direction circonférentielle (U_{V}) perpendiculaire aux axes longitudinaux de cartouche de vanne (V_{L}).

2. Dispositif sanitaire de raccordement de conduite apte au montage mural selon la revendication 1, dans lequel les cartouches de vannes sont de forme cylindrique et présentent chacune, sur une première face frontale (17), une unité de raccordement de vanne (18) électrique et, sur une deuxième face frontale (19) tournée vers le côté de couplage de conduite du corps de bloc de vannes, l'entrée de vanne et la sortie de vanne.

3. Dispositif sanitaire de raccordement de conduite apte au montage mural selon la revendication 1 ou 2, dans lequel le corps de bloc de vannes présente sur son pourtour une bague de retenue (20) périphérique présentant l'élasticité du caoutchouc, et la vanne respective présente un câble de raccordement électrique (21) partant de la première face frontale de sa cartouche de vanne, qui est guidé à travers un espace intermédiaire de guidage de câble (22) entre la bague de retenue et une zone adjacente du corps de bloc de vannes.

4. Dispositif sanitaire de raccordement de conduite apte au montage mural selon l'une des revendications 1 à 3, dans lequel la surface d'appui côté base et la surface d'appui côté bloc de vannes reposent chacune sur une cuvette sphérique (23).

5. Dispositif sanitaire de raccordement de conduite apte au montage mural selon l'une des revendications 1 à 4, dans lequel l'entrée d'eau débouche latéralement dans le corps de base au niveau d'une zone latérale (25) adjacente au côté de fixation au mur.

6. Dispositif sanitaire de raccordement de conduite apte au montage mural selon l'une des revendications 1 à 5, dans lequel le corps de bloc de vannes présente une section transversale circulaire à l'intérieur de laquelle les axes longitudinaux de cartouche de vanne sont disposés sur un rayon commun (R_{V}) avec un décalage angulaire équidistant dans la direction circonférentielle.

7. Dispositif sanitaire de raccordement de conduite apte au montage mural selon l'une des revendications 1 à 6, dans lequel le corps de base comprend une plaque de base (26) apte au montage mural et un corps formant socle (27) fixé à la plaque de base et présentant l'entrée d'eau.

8. Dispositif sanitaire de raccordement de conduite apte au montage mural selon l'une des revendications 1 à 7, dans lequel le corps de base comprend un logement pour gaine (31) destiné à une gaine (32) d'une ligne électrique.

9. Dispositif sanitaire de raccordement de conduite apte au montage mural selon l'une des revendications 1 à 8, dans lequel le corps de base constitue une boîte de raccordement ayant un couvercle de boîte (33).
